# EUROPEAN PATENT SPECIFICATION

(11) **EP 2 269 906 B1**
(45) Date of publication and mention of the grant of the patent: **16.01.2013**
(21) Application number: 09164503.6
(22) Date of filing: 03.07.2009
(51) Int. Cl.: B62M 3/08

(54) **Pivot assembly between treadle and bicycle crank**
Schwenkverbindung zwischen Pedal und Fahrradkurbel
Ensemble de pivot entre la pédale et la manivelle d'une bicyclette

(43) Date of publication of application: 05.01.2011
(73) Proprietor: VP Components Co., Ltd., Taiwan (TW)
(72) Inventor: Lin, Wen-Hwa, 438, Waipu (TW)
(74) Representative: Viering, Jentschura & Partner

(56) References cited:
- FR-A- 2 684 635
- JP-A- 2007 253 919
- US-A- 5 586 472
- US-A1- 2003 205 103

## Description

### BACKGROUND OF THE INVENTION

### 1. Technical Field

The present invention relates to a pivot assembly according to the preamble of Claim 1. Accordingly, the present invention severally relates to bicycle parts and more particularly, to a pivot assembly for coupling a treadle with a bicycle crank, wherein the pivot assembly is easy to assemble and disassemble so as to benefit bicycle manufacturers by reducing assembling time and allow a bicycle user to easily change treadles by himself/herself without using additional tools.

### 2. Description of Related Art

A known device for coupling a treadle with a bicycle crank has been disclosed in Taiwan Patent No. M347351, as shown in **Figure 1****.** The known device comprises a treadle shaft **11** to be combined with a treadle **10** and a connector **21** to be combined with a bicycle crank **20.** The treadle **10** is designed to revolve on the treadle shaft **11** freely and the connector **21** has one end provided with a threaded segment **22** for being coupled with a threaded hole **23** formed on the crank **20.** The connector **21** has an opposite end formed with a hole **24** for receiving the treadle shaft **11,** wherein a wall defining the hole **24** is provided with a plurality of balls **25** that are annularly arranged. The balls **25** are controlled by a controlling ring **26** attached to an exterior of the connector **21** for moving toward or away an axis of the connector **21.** When moving toward the axis of the connector **21,** each said ball **25** partially projects from the hole **24** and gets coupled with a corresponding ball recess **12** formed on the treadle shaft **11,** so that the treadle shaft **11** is combined with the connector **21.** When moving away the axis of the connector **21,** each said ball **25** no more exposes in the hole **24** and leaves the corresponding ball recess **12,** so that the treadle shaft **11** is free from the engagement with the connector **21.**

The conventional connector **21** composed of tiny springs, recesses, rings and other positioning elements is structurally complicated and difficult to assemble. Nevertheless, a defective connector **21** can significantly increase time consumption of bicycle assembling process and raise failure rate of bicycle assembling process. Besides, once the treadle **10** is coupled with the crank **20,** the coupling problem between the controlling ring **26** and the balls **25** can render the treadle shaft **11** jammed in the connector **21** and the treadle **10** can be no more disassembled from the crank **20.**

US 2003 205 103 A1 discloses a pivot assembly according to the preamble of claim 1.

### SUMMARY OF THE INVENTION

The primary objective of the present invention is to provide a pivot assembly between a treadle and a bicycle crank, wherein the pivot assembly is simple in structure and easy to use, so as to allow a bicycle user to assemble and disassemble the treadle on his/her own. When applied to a folding bicycle, the disclosed pivot assembly allows a treadle to be easily detached so as to facilitate storage of the collapsed bicycle.

To achieve these and other objects of the present invention, the invention provides a pivot assembly according to claim 1. Further embodiments of the invention are described in the dependent claims.

According to the present invention, a pivot assembly for coupling a treadle with a crank of a bicycle comprises: a circular seat, installed therein two transversely shiftable buckle rings and having two pressing blocks peripherally attached thereto for shifting the two buckle rings; and a pivot shaft, having two slots and passing through the buckle rings so that the buckle rings have wedges thereof normally engaged with the slots. Thereby, when the pressing blocks are pressed, the wedges leave the slots so as to allow a connecting shaft of the treadle to enter the pivot shaft. When the pressing blocks are released, the wedges engage with the slots again and fit in a groove formed on the connecting shaft so that the treadle and the pivot shaft are combined.

### BRIEF DESCRIPTION OF THE DRAWINGS

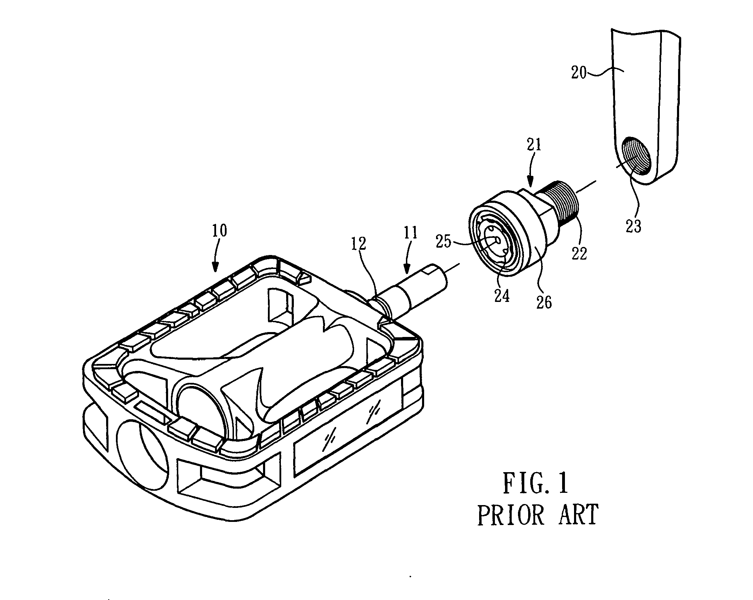

**Figure 1** shows a known device for coupling a bicycle treadle with a crank.
**Figure 2** is an exploded view of a pivot assembly according to the present invention.
**Figure 3** shows the pivot assembly, a bicycle treadle, and a crank.
**Figure 4** is a vertical sectional view of the pivot assembly.
**Figure 5** is another vertical sectional view of the pivot assembly showing the pivot assembly in operation.
**Figure 6** is a horizontal sectional of the pivot assembly.
**Figure 7** is another horizontal sectional view of the pivot assembly showing the pivot assembly in operation.

### DETAILED DESCRIPTION OF THE PREFERRED EMBODIMENT

While a preferred embodiment provided hereinafter for illustrating the concept of the present invention as described above, it is to be understood that the components of the embodiment shown in the accompanying drawings are depicted for the sake of easy explanation and need not to be made in scale.

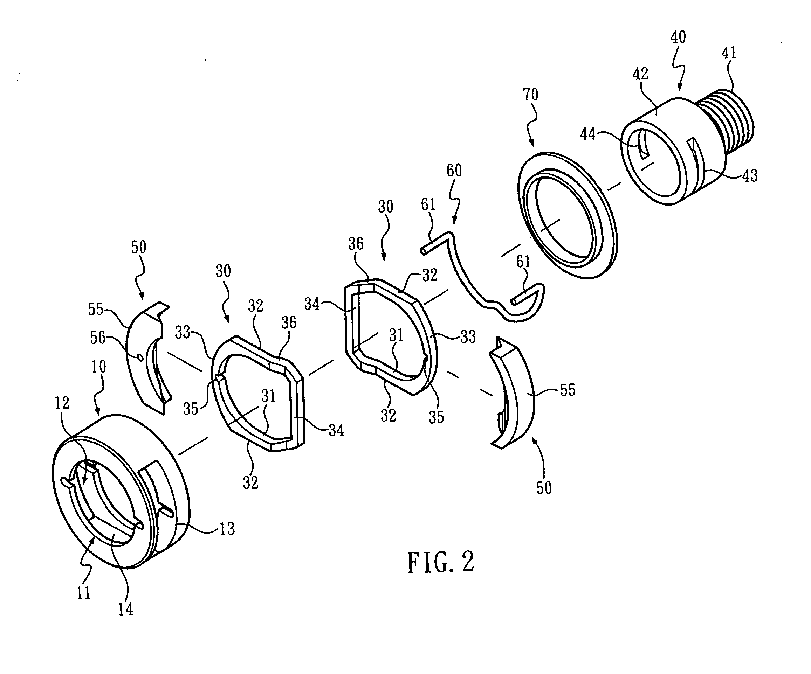

Please refer to **Figures 2****,** **3****,** **4** and **6** for a pivot assembly of the present invention. The pivot assembly comprises a circular seat **10,** two buckle rings **30,** a pivot shaft **40,** two pressing blocks **50,** a semicircular spring **60,** and an annular cap **70.**

The circular seat **10** has an axially extending through hole **11** and an accommodating space **12** formed in the circular seat **10.** The through hole **11** and the accommodating space **12** are intercommunicated. Two openings **13** are formed on an outer periphery of the circular seat **10** and diametrically opposite to each other and intercommunicated with the accommodating space **12.** In addition, a pair of straight inner walls **14** is formed in the circular seat **10** to flank the accommodating space **12.**

Each of the two buckle rings **30** has a generally annular body **31.** The annular body **31** includes two straight outer walls **32** parallel to each other, an arched abutting portion **33** and a bar-shaped wedge **34.** A pair of bent portions **36** is formed at the border of the wedge **34** and the body **31** so that the wedge **34** is not level with the abutting portion **33** and the body **31.** The two buckle rings **30** are piled and received in the accommodating space **12** of the circular seat **10** together in the manner that one of the buckle ring **30** has its abutting portion **33** adjacent to the wedge **34** of the other buckle ring **30** while the straight outer walls **32** contacting the straight inner walls **14** of the circular seat **10,** so that the two buckle rings **30** are retained from rotating in the accommodating space **12.**

The pivot shaft **40** has a threaded portion **41** and a socket portion **42** that are coaxially connected. The socket portion **42** passes through the through hole **11** and the accommodating space **12** of the circular seat **10.** Each said buckle ring **30** has an inner diameter greater than an outer diameter of the socket portion **42** so that the buckle rings **30** are allowed to transversely shift in the accommodating space **12.** The socket portion **42** of the pivot shaft **40** is peripherally formed with a first slot **43** and a second slot **44** that are diametrically opposite on the socket portion **42.**

Each of the two pressing blocks **50** is an arched member having an outer side formed as an arched wall **55** matching an outer periphery of the circular seat **10** and an inner side provided with a first stair **51,** a second stair **52,** and a third stair **53.** The two pressing blocks **50** are settled in the two openings **13** of the circular seat **10,** respectively, with their first stairs **51** receiving the abutting portions **33** of the two buckle rings **30** and with their second stairs **52** abutting on the wedges **34.**

The semicircular spring **60** is deposited in the circular seat **10** with two pin portions **61** thereof piercing through two holes **56, 35** preformed on the pressing blocks **50** and the buckle rings **30.**

The annular cap **70** is coupled to the circular seat **10** in a close fit so as to position the spring **60.**

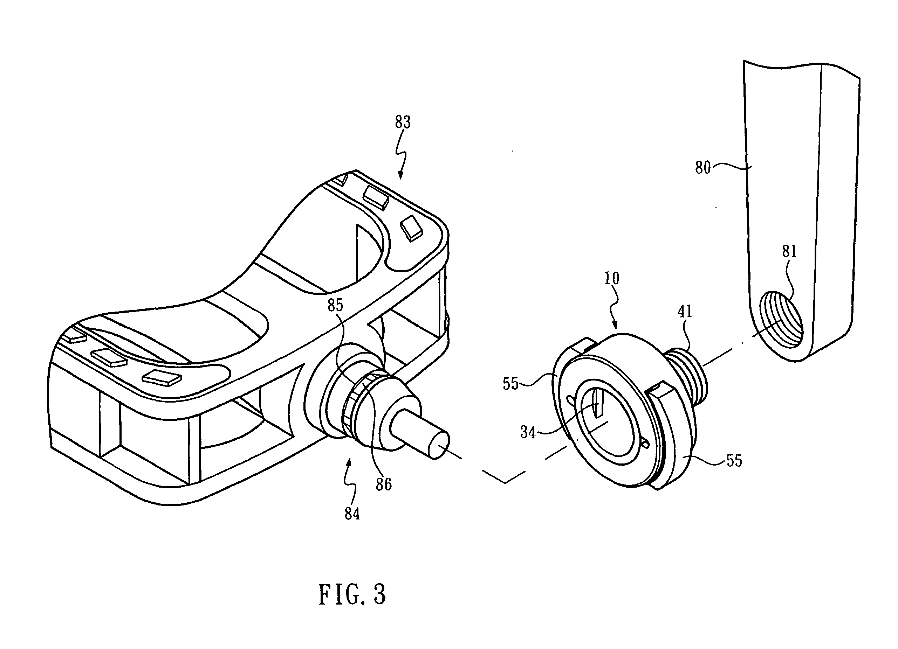

Referring to **Figure 3****,** in use, the pivot assembly has its threaded portion **41** on the pivot shaft **40** coupled with a threaded hole **81** formed on a crank **80,** and has its socket portion **42** mounted around a connecting shaft **84** of the treadle **83.** The connecting shaft **84** is peripherally formed with a groove **85** that has a bottom includes at least two flat retaining planes **86.**

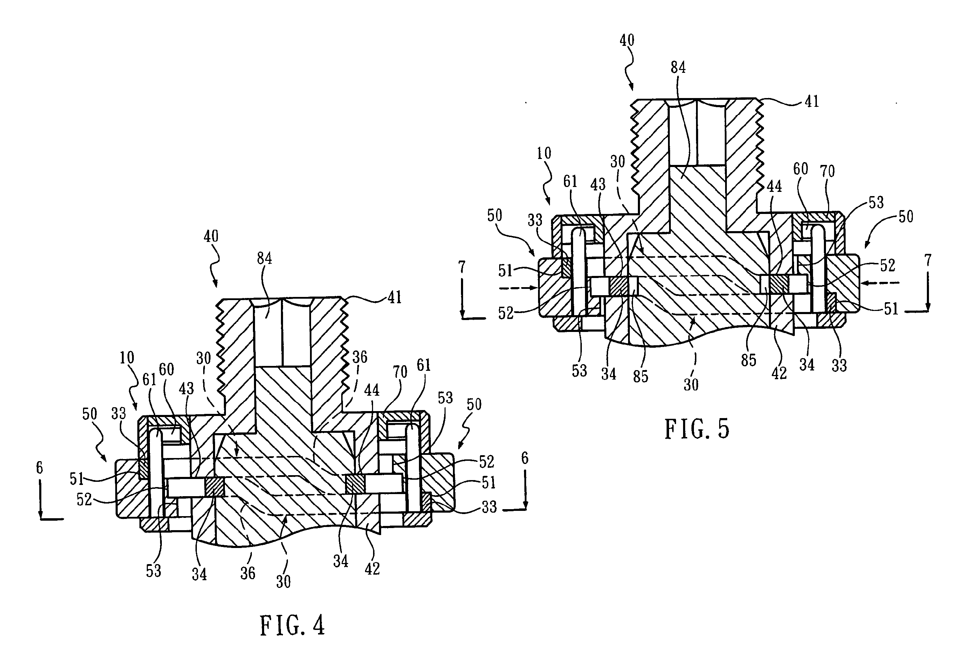

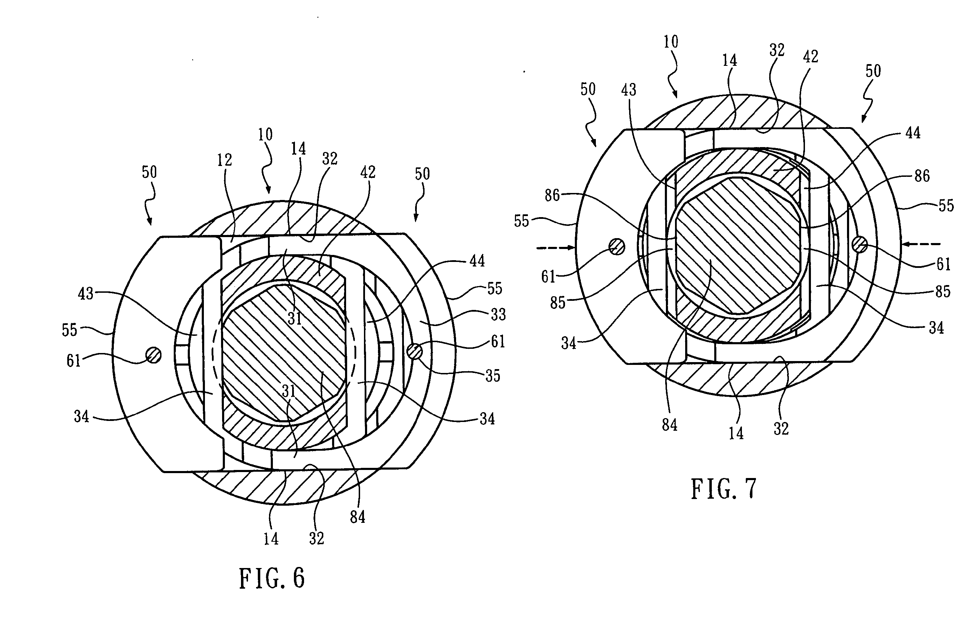

Seeing **Figures 4** and **6****,** the two pressing blocks **50** are normally pushed outward and jutting out of the outer periphery of the circular seat **10** by the spring **60,** so that the two buckle rings **30** are pulled outward to have the wedges **34** entering the first slot **43** and the second slot **44** and thus jutting out of the inner wall of the socket portion **42.** Consequently, the two wedges **34** jutting out of the inner wall of the socket portion **42** are received in the groove **85** so as to be abutted, and thus retained by the two retaining planes **86.**

As can be seen in **Figures 5** and **7****,** to disassemble the treadle **83,** the two pressing blocks **50** can be pressed inward so that the two buckle rings **30** shift in converse directions to make the two wedges **34** move onto the second stairs **52** of the pressing blocks **50.** At this time, the wedges **34** leaving the retaining planes **86** and the groove **85** of the connecting shaft **84** allow the treadle **83** to move away from the socket portion **42** along an axis of the connecting shaft **84.** The bent portions **36** on the relatively shifting buckle rings **30** facilitate reducing the contact area between the buckle rings **30,** thereby minimizing the abrasion of the buckle rings **30.**

The present invention has been described with reference to the preferred embodiment and it is understood that the embodiment is not intended to limit the scope of the present invention. Moreover, as the contents disclosed herein should be readily understood and can be implemented by a person skilled in the art, all modifications which do not depart from the concept of the present invention should be encompassed by the appended claims.

## Claims

1. A pivot assembly for coupling a treadle with a bicycle crank, the pivot assembly comprising
a circular seat (10) having an axially extending through hole (11) and an accommodating space (12) formed in the circular seat (10) that are intercommunicated, wherein two openings (13) are diametrically opposite on an outer periphery of the circular seat (10) and intercommunicated with the accommodating space (12);
a pivot shaft (40) having a threaded portion (41) and a socket portion (42) that are coaxially connected, wherein the socket portion (42) passes through the through hole (11) and the accommodating space (12) of the circular seat (10), the socket portion (42) of the pivot shaft (40) being peripherally formed with a first slot (43) and a second slot (44) that are diametrically opposite on the socket portion (42); **characterized by**
two buckle rings (30) each having an annular body (31), and an arched abutting portion (33) as well as a bar-shaped wedge (34) formed at two ends of the body (31), wherein the two buckle rings (30) are such piled and received in the accommodating space (12) of the circular seat (10) together that each of the buckle ring (30) has the abutting portion (33) adjacent to the wedge (34) of the other buckle ring (30);
two pressing blocks (50) each received in one said opening (13) of the circular seat (10) and having an inner side provided with a first stair (51) for receiving the abutting portion (33) of a said buckle ring (30);
a semicircular spring (60) deposited at a side of the circular seat (10) with two pin portions (61) thereof piercing through two holes (56)(35) preformed on the pressing blocks (50) and the buckle rings (30); and
an annular cap (70) coupled to the side of the circular seat (10) in a close fit so as to position the spring (60).

2. The pivot assembly of Claim 1, wherein a pair of straight inner walls (14) is formed in the circular seat (10) to flank the accommodating space (12) and the body (31) of each said buckle ring (30) includes two straight outer walls (32) parallel to each other for contacting the inner walls (14) of the circular seat (10).

3. The pivot assembly of Claim 1, wherein a pair of bent portions (36) is formed at borders of the wedge (34) and the body (31) so that the wedge (34) is not level with the abutting portion (33) and the body (31).

4. The pivot assembly of Claim 1, wherein each of the two pressing blocks (50) has an outer side formed as an arched wall (55) for matching an outer periphery of the circular seat (10).

5. The pivot assembly of Claim 1, wherein each of the two pressing blocks (50) has an inner side provided with a second stair (52), and a third stair (53), the second stair (52) being corresponding to the wedge (34).

## Patentansprüche

1. Drehverbindung zum Kuppeln eines Pedals mit einer Fahrradkurbel, die Drehverbindung aufweisend:
eine kreisförmige Aufnahme (10) mit einem sich axial erstreckenden Durchgangsloch (11) und einem in der kreisförmigen Aufnahme (10) ausgebildeten Aufnahmeraum (12), die miteinander in Verbindung stehen, wobei auf einem äußeren Umfang der kreisförmigen Aufnahme (10) zwei Öffnungen (13) diametral gegenüber angeordnet sind und mit dem Aufnahmeraum (12) in Verbindung stehen;
einem Drehschaft (40) mit einem Gewindeabschnitt (41) und einem Sockelabschnitt (42), die koaxial verbunden sind, wobei der Sockelabschnitt (42) durch das Durchgangsloch (11) und den Aufnahmeraum (12) der kreisförmigen Aufnahme (10) hindurch geht, wobei der Sockelabschnitt (42) des Drehschafts (40) peripher mit einem ersten Schlitz (43) und einem zweiten Schlitz (44) ausgebildet ist, die auf dem Sockelabschnitt (42) diametral gegenüber angeordnet sind;
**gekennzeichnet durch**:
zwei Schnallenringe (30) mit jeweils einem ringförmigen Körper (31), wobei an zwei Enden des Körpers (31) ein bogenförmiger Stoßabschnitt (33) sowie ein stabförmiger Feststellkeil (34) ausgebildet sind, wobei die zwei Schnallenringe (30) in dem Aufnahmeraum (12) der kreisförmigen Aufnahme (10) derart zusammen gestapelt und aufgenommen sind, dass jeder der Schnallenringe (30) seinen Stoßabschnitt (33) neben dem Feststellkeil (34) des anderen Schnallenrings (30) angeordnet hat;
zwei Drückbacken (50) jeweils aufgenommen in einer der Öffnungen (13) der kreisförmigen Aufnahme (10) und mit einer inneren Seite bereitgestellt mit einer ersten Stufe (51) zum Aufnehmen des Stoßabschnitts (33) eines der Schnallenringe (30);
eine an einer Seite der kreisförmigen Aufnahme (10) positionierte halbkreisförmige Feder (60), wobei zwei Stiftabschnitte (61) davon **durch** zwei auf den Drückbacken (50) und den Schnallenringen (30) verwirklichte Löcher (56, 35) hindurch stechen; und
eine mit der Seite der kreisförmigen Aufnahme (10) zum Positionieren der Feder (60) satt anliegende gekuppelte ringförmige Kappe (70).

2. Drehverbindung gemäß Anspruch 1, wobei in der kreisförmigen Aufnahme (10) ein Paar an geraden inneren Wänden (14) ausgebildet ist, um den Aufnahmeraum (12) zu flankieren, und wobei der Körper (31) eines jeden Schnallenrings (30) parallel zueinander zwei gerade äußere Wände (32) aufweist, um die inneren Wände (14) der kreisförmigen Aufnahme (10) zu kontaktieren.

3. Drehverbindung gemäß Anspruch 1, wobei ein Paar gebogene Abschnitte (36) an den Rändern des Keils (34) und des Körpers (31) derart ausgebildet ist, dass der Keil (34) nicht bündig mit dem Stoßabschnitts (33) und dem Körper (31) ist.

4. Drehverbindung gemäß Anspruch 1, wobei jeder der beiden Drückbacken (50) eine als eine bogenförmige Wand (55) geformte äußere Seite aufweist, um mit einer äußeren Begrenzungsfläche der kreisförmigen Aufnahme (10) zusammen zu passen.

5. Drehverbindung gemäß Anspruch 1, wobei jeder der beiden Drückbacken (50) eine mit einer zweiten Stufe (52) und einer dritten Stufe (53) versehene innere Seite aufweist, wobei die zweite Stufe (52) mit dem Keil (34) korrespondiert.

## Revendications

1. Ensemble pivot destiné à coupler une pédale à une manivelle de bicyclette, l'ensemble pivot comprenant :
- un siège circulaire (10) ayant un trou traversant s'étendant axialement (11) et un espace de réception (12) formé dans le siège circulaire (10) qui communiquent l'un avec l'autre, deux ouvertures (13) étant opposées diamétralement sur une périphérie extérieure du siège circulaire (10) et communiquant avec l'espace de réception (12) ;
- un arbre de pivot (40) ayant une partie filetée (41) et une partie logement (42) qui sont reliées coaxialement, la partie logement (42) passant à travers le trou traversant (11) et l'espace de réception (12) du siège circulaire (10), la partie logement (42) de l'arbre de pivot (40) comportant de façon périphérique une première fente (43) et une seconde fente (44) qui sont opposées diamétralement sur la partie logement (42) ; **caractérisé par** le fait :
- deux anneaux de boucle (30) ayant chacun un corps annulaire (31) et une partie de butée arquée (33) ainsi qu'un coin en forme de barre (34) formés aux deux extrémités du corps (31), les deux anneaux de boucle (30) étant rentrés et reçus ensemble dans l'espace de réception (12) du siège circulaire (10) de telle sorte que chacun des anneaux de boucle (30) a la partie de butée (33) adjacente au coin (34) de l'autre anneau de boucle (30) ;
- deux blocs de pression (50) reçus chacun dans une ouverture précitée (13) du siège circulaire (10) et ayant un côté intérieur comportant un premier gradin (51) pour recevoir la partie de butée (33) d'un anneau de boucle précité (30) ;
- un ressort semi-circulaire (60) disposé d'un côté du siège circulaire (10) avec deux parties broches (61) de celui-ci passant à travers deux trous (56) (35) préformées sur les blocs de pression (50) et les anneaux de boucle (30) ; et
- un capuchon annulaire (70) couplé au côté du siège circulaire (10) avec ajustement étroit de façon à positionner le ressort (60).

2. Ensemble pivot selon la revendication 1, dans lequel une paire de parois intérieures droites (14) est formée dans le siège circulaire (10) pour encadrer l'espace de réception (12) et le corps (31) de chaque anneau de boucle précité (30) comprend deux parois extérieures droites (32) parallèles l'une à l'autre destinées à venir en contact avec les parois intérieures (14) du siège circulaire (10).

3. Ensemble pivot selon la revendication 1, dans lequel une paire de parties coudées (36) est formée aux bordures du coin (34) et du corps (31) de telle sorte que le coin (34) n'affleure pas la partie de butée (33) et le corps (31).

4. Ensemble pivot selon la revendication 1, dans lequel chacun des deux blocs de pression (50) a un côté extérieur se présentant sous la forme d'une paroi arquée (55) pour correspondre à une périphérie extérieure du siège circulaire (10).

5. Ensemble pivot selon la revendication 1, dans lequel chacun des deux blocs de pression (50) a un côté intérieur comportant un deuxième gradin (52) et un troisième gradin (53), le deuxième gradin (52) étant en correspondance avec le coin (34).
